# EUROPÄISCHE PATENTSCHRIFT

(11) **EP 2 842 710 B1**
(45) Veröffentlichungstag und Bekanntmachung des Hinweises auf die Patenterteilung: **03.01.2018**
(21) Anmeldenummer: 14003033.9
(22) Anmeldetag: 03.09.2014
(51) Int. Cl.: B29B 7/76, B01F 15/04, B29C 67/24

(54) **VORRICHTUNG ZUM GENAUEN DOSIEREN EINES FLUIDVOLUMENSTROMS FÜR EINE KUNSTSTOFFMISCHUNG**
DEVICE FOR EXACT METERING OF A VOLUME FLOW OF A FLUID FOR A POLYMERIC MIXTURE
DISPOSITIF POUR LE DOSAGE PRÉCIS D'UN DÉBIT VOLUMIQUE D'UN FLUIDE POUR UN MÉLANGE POLYMÈRE

(30) Priorität: 03.09.2013 DE 102013014537
(43) Veröffentlichungstag der Anmeldung: 04.03.2015
(73) Patentinhaber: Tartler, Udo, 64750 Lützelbach/Haingrund (DE)
(72) Erfinder: Tartler, Udo, 64750 Lützelbach/Haingrund (DE)
(74) Vertreter: Hoffmann Eitle

(56) Entgegenhaltungen:
- EP-A1- 0 025 844
- WO-A1-2011/066095
- DE-A1- 2 543 302
- DE-A1- 2 724 132
- DE-A1- 3 240 296
- DE-A1-102006 015 768
- US-A- 4 199 303

## Beschreibung

Die vorliegende Erfindung betrifft eine Vorrichtung zum genauen Dosieren eines Fluid-Volumenstroms auch geringer Flussmenge bis zum Stillstand des Volumenstroms einer Flüssigkomponente in einer Mischerzuleitung zum Mischen von Kunststoff, wobei die Vorrichtung einen Fluidvorratstank aufweist, der über eine Pumpe und durch einen Volumenstromzähler in Fluidleitungsverbindung mit der Mischerzuleitung steht.

Zum Herstellen von Kunststoff (zum Beispiel etwa vor dem Einleiten in den Anguss einer Gussform oder zum Beispiel beim Herstellen von großflächigen Kunststoffteilen etwa im Karosseriebau oder beim Bau von Windflügeln) werden bei einigen Kunststoffen mindestens zwei fluide Komponenten so mit einander vermischt, dass sich das entstandene insbesondere flüssige, auch pastöse, Gemisch vernetzt und "aushärtet". Das Einleiten in die Gussform oder zum Beispiel auch das Einbringen in ein Fasergelege oder -gewebe zum Herstellen von GFK oder CFK erfolgt verbreitet durch eine rohrförmige Durchleitung (Mischer) mit Formelementen (Verwirbelungselementen) in ihrem Innenraum, die hindurchströmendes Fluid verschiedentlich um-, ablenken, lokal stauen, Turbulenzen erzeugen und/oder verwirbeln und somit durchmischen. In diesen Mischer hinein führen bekanntlich Zuleitungen insbesondere in der Anzahl der fluiden Komponenten, aus denen der Kunststoff zusammenzumischen ist. So lässt sich das Vermischen der Komponenten so spät wie möglich zum Beispiel vor dem Einleiten in die Gussform oder dem Aufbringen auf oder Einbringen in das Gelege oder Gewebe gewährleisten, zum Beispiel um die Fließfähigkeit des Kunststoffs vor seinem Aushärten für das oben erwähnte Formgeben möglichst lange verfügbar zu haben.

In einigen Anwendungen der Kunststoffherstellung aus mindestens zwei Komponenten in einem Mischer ist es (neben der genauen Dosierung des Mischverhältnisses der mindestens zwei Komponenten zueinander, also der genauen Dosierung des Volumenstroms aller beteiligten Komponenten) erforderlich, dieses genaue Dosierungsverhältnis auch bei sehr geringer Abgabemenge des (noch flüssigen) Kunststoffgemischs aus dem Mischer aufrecht zu erhalten. Zum Beispiel bei CNC-gesteuerten Flächenauftragsverfahren kann dies erforderlich sein, wenn in bestimmten Bereichen der zu laminierenden Fläche nur besonders wenig Materialauftrag erforderlich ist.

Hier erweisen sich herkömmliche Zahnraddosierpumpen und Volumen- oder Massestromzähler beim Unterschreiten einer gewissen Fördermenge als ungenau betreffend die Flussmenge des geförderten Volumenstroms. Dies kann ein falsches Komponenten-Mischungsverhältnis zur nachteiligen Folge haben und zum Beispiel zu minderwertigen Materialeigenschaften und Materialinhomogenitäten führen.

Aus der DE 2543302 ist eine Vorrichtung zum Herstellen von Reaktionsgemischen aus flüssigen Reaktionskomponenten mit den Merkmalen des Oberbegriffs von Anspruch 1 dieser Schrift bekannt.

Der vorliegenden Erfindung liegt die Aufgabe zu Grunde, eine Vorrichtung zum genauen Dosieren eines Fluid-Volumenstroms auch geringster Flussmenge in einer Fluid-Dosierleitung zu schaffen, deren Genauigkeit und Regelbarkeit für beliebige Flussmengen bis zum Stillstand des Volumenstroms verbessert ist.

Diese Aufgabe wird von einer Vorrichtung mit den Merkmalen des Anspruchs 1 gelöst. Bevorzugte Ausgestaltungen sind in den Unteransprüchen angegeben.

Eine erfindungsgemäße Vorrichtung dient zum genauen Dosieren eines Fluid-Volumenstroms der insbesondere bis gegen Null geregelt werden soll, in einer Fluid-Dosierleitung und besonders bevorzugt zum genauen Dosieren eines Flüssigkeits-Volumenstroms auch von relativ großen Flussmengen, die bis gegen Null dosiert werden sollen, einer Flüssigkomponente in einer Mischerzuleitung zum Mischen von Kunststoff. Die erfindungsgemäße Vorrichtung hat einen Fluidvorratstank, der über eine Pumpe und durch einen Volumenstromzähler in Fluidleitungsverbindung mit der Mischerzuleitung steht. Diese bekannte Anordnung ist aber wie eingangs dargestellt beim Unterschreiten einer gewissen Fördermenge ungenau, weil insbesondere die Pumpe und/oder die Messzelle (die Sensorik zum "Messen der

Strömung", insbesondere ein Volumenstromzähler, zum Beispiel aber auch ein Massestromzähler oder Schraubenspindelzähler) bei sehr kleinen Fördermengen nicht mehr genügende oder genügend genaue Informationen liefern können, um den Volumenstrom noch ausreichend genau regeln zu können. Dies betrifft also die Flussmenge des geförderten Volumenstroms, was ein falsches Komponenten-Mischungsverhältnis zur nachteiligen Folge haben kann und zum Beispiel zu minderwertigen Materialeigenschaften und Materialinhomogenitäten des so gemischten Kunststoffs führt oder sogar zum Abbruch der Kunststoffmischungsproduktion überhaupt, etwa weil die (sehr geringe) Fördermenge innerhalb der Toleranz der Fördergenauigkeit der Pumpe, des Volumenstromzählers, der Messzelle, der Massestromzählers und/oder ihrer Steuerung oder Regelung so dicht an Null liegt, dass die Anlage tatsächlich gar nicht mehr fördern und/oder regeln kann.

Erfindungsgemäß gibt es deshalb in der Vorrichtung eine Fluid-Rückleitung, die von einer der Fluidleitungen (zwischen Tank und Mischerzuleitung) stromabwärts vom ("hinter dem") ersten Volumenstromzähler abzweigt und in den Tank zurückführt.

Die Abzweigung erfolgt in einer Verteilereinrichtung, die einen Eingang (als Einmündung der vom Tank und vorzugsweise auch der dort angeordneten Dosierpumpe kommenden Fluidleitung) und zwei Ausgänge (einen in die Rückleitung und einen in die Mischerzuleitung) aufweist. Diese Verteilereinrichtung verteilt den von der Pumpe aus dem Tank geförderten Volumenstrom (den Eingangs-Volumenstrom der Verteilereinrichtung) auf die zwei Ausgänge der Verteilereinrichtung, und zwar in einem möglichst genau einstellbaren Flussmengenverhältnis.

Zum Beispiel erfolgt die Ansteuerung der erfindungsgemäßen Abzweigung folgendermaßen: Die Verteilung der Flussmengen auf die zwei Ausgänge wird erst vorgenommen, wenn die Durchflussmenge durch den Volumenstromzähler in der Fluidleitungsverbindung zwischen Tank und Mischerzuleitung an seiner minimalen, also vom Zähler noch genau zu regelnden Flussmenge angekommen ist. Dann kann die Verteilereinrichtung angesteuert und über einen zweiten Volumenstromzähler geregelt werden.

Die Fluid-Rückleitung weist nämlich zudem einen zweiten Volumenstromzähler auf. Wenn nun ein sehr geringer Volumenstrom in der Mischerzuleitung erforderlich ist, kann die Pumpe erfindungsgemäß weiterhin einen deutlich größeren Volumenstrom aus dem Tank durch den ersten Volumenstromzähler in den Eingang der Verteilereinrichtung fördern, den sie nämlich gemäß ihren technischen Spezifikationen konstant und/oder genau zu fördern technisch in der Lage ist. Dieser Volumenstrom ist am ersten Volumenstromzähler ablesbar. Indem nun an der Verteilereinrichtung in die (zurück zum Tank führende) Rückleitung ein Volumenstrom abgezweigt wird, der fast genau so groß ist wie der Volumenstrom durch den ersten Volumenstromzähler (dieser "Rück-Volumenstrom" ablesbar am zweiten Volumenstromzähler in der Rückleitung) und indem sich diese (durchaus erfindungsgemäß möglicherweise sehr kleine) Differenz zwischen durch den ersten Volumenstromzähler gefördertem Volumenstrom und in die Rückleitung abgezweigtem Volumenstrom an der Verteilereinrichtung genau einstellen lässt, ergibt sich genau diese - möglicherweise sehr kleine - Volumenstrom-Differenz als resultierender - möglicherweise sehr kleiner, und dann sogar wunschgemäß (z. B. weil ein Mischungsverhältnis und Prozess es erfordern) möglicherweise zum völligen Erliegen gekommener - Volumenstrom erfindungsgemäß in der Mischerzuleitung. Vorzugsweise hat die Vorrichtung eine Signalverarbeitungseinrichtung, die aus Signalen der beiden Volumenstromzähler ein Differenzsignal berechnet, sowie in jedem Fall eine Steuerungseinrichtung, die in Abhängigkeit von Signalen der beiden Volumenstromzähler (insbesondere in Abhängigkeit von diesem Differenzsignal) an der Verteilereinrichtung das Flussmengenverhältnis einstellt. Das eben beschriebene Verfahren kann dann automatisch, also gesteuert oder geregelt, erfolgen.

Die Erfindung sieht zudem vor, auch in der Fluidleitung die von der Verteilereinrichtung zum Mischer führt, einen dritten Volumenstromzähler anzuordnen. Dies ermöglicht, die Flussmenge in der Mischerzuleitung von 100% der Förderleistung der Pumpe über geringe Flussmengen wie 1%, 0,1% der Förderleistung bis zum Stillstand genau einzustellen und zu messen und dabei die Pumpe möglicherweise nur auf eine einzige bestimmte Fördermenge eingestellt zu lassen (zum Beispiel die höchste für einen Mischprozess erforderliche - sie lässt sich mittels des ersten Zählers kontrollieren, auch regeln oder steuern). Dann kann die jeweils momentan in der Mischerzuleitung benötigte Flussmenge (und eben dank des dritten Zählers auch schon bei hohen in der Mischerzuleitung benötigten Flussmengen) durch Einstellen, also Steuern oder Regeln, nur der Verteilereinrichtung dosiert werden - und zwar kontrolliert, also gesteuert oder geregelt, durch den zweiten und dritten Volumenstromzähler. Dabei können die Messwerte des zweiten und dritten Volumenstromzählers zum Beispiel so lange beide (zum Beispiel gemittelt) der Einstellung der Verteilereinrichtung zu Grunde gelegt werden, wie "die Summenkontrolle stimmt": nämlich die Summe der im zweiten und dritten Volumenstromzähler gemessenen Flussmenge gleich der im ersten Volumenstromzähler gemessenen Flussmenge ist (denn die Summe der aus der Verteilereinrichtung ausfließenden Mengen muss gleich der einfließenden Menge sein - entsprechend können insbesondere alle drei Volumenstromzähler zum Beispiel vor Beginn des Prozesses auch gegenseitig kalibriert werden). Sobald die Summe der Messwerte des zweiten und dritten Volumenstromzählers dann aber von der im ersten Volumenstromzähler gemessenen Flussmenge abweicht, bedeutet dies (bei wie gesagt kalibrierten Volumenstromzählern), dass nun die Messung eines der beiden Zähler ungenau, nämlich die Flussmenge durch einen der beiden (des zweiten oder dritten) zu gering geworden ist, um noch genau genug gemessen zu werden - die Flussmenge durch ihn liegt nun unter seiner zur genauen Messung minimalen Flussmenge, also außerhalb, nämlich unterhalb seines Toleranzbereichs. Dieser Volumenstromzähler wird nun für das Einstellen, also Steuern oder Regeln, der Verteilereinrichtung solange ignoriert bis die Summenkontrolle wieder stimmt.

Zum Bespiel: Solange (zum Beispiel zu Beginn eines Mischprozesses) eine hohe Flussmenge in die Mischerzuleitung gelangen soll, wird - eingestellt (also gesteuert oder geregelt) an der Verteilereinrichtung - nur ein geringer Anteil der von der Pumpe geförderten Flussmenge durch die Fluid-Rückleitung abgeleitet (in den Tank zurückgeleitet). Wenn die gesamte von der Pumpe geförderte Flussmenge in die Mischerzuleitung gelangen soll, wird gar nichts durch die Fluid-Rückleitung in den Tank zurückgeleitet. In einem dieser Betriebszustände kann dann die Messung des zweiten Volumenstromzählers (in der Fluid-Rückleitung) ignoriert werden, denn die Flussmenge liegt hier dann wohl (erkennbar an der Summenkontrolle - und vorzugsweise entsprechend programmiert wie möglicherweise jeder einzelne Zusammenhang hier in einer entsprechenden Regelung oder Steuerung) wie beschrieben unterhalb der Toleranz des zweiten Volumenstromzählers. Sobald die Summenkontrolle wieder stimmt - sobald also sowohl durch die Fluid-Rückleitung als auch durch die Mischerzuleitung ein Volumenstrom fließt, der groß genug ist, um im Toleranzbereich des zweiten und des dritten Zählers zu liegen - braucht keiner der beiden Zähler ignoriert zu werden. Dies ist logischerweise der Betriebszustand bei mittleren Flussmengen in der Mischerzuleitung, wenn also nicht mehr die gesamte oder fast die gesamte von der Pumpe geförderte Flussmenge in die Mischerleitung gelangen soll, sondern wenn ein (vom dritten Zähler genau messbarer) Volumenstrom durch die Mischerzuleitung fließt und außerdem auch ein (vom zweiten Zähler genau messbarer) Volumenstrom durch die Fluid-Rückleitung. Wenn dann schließlich ein Betriebszustand erforderlich ist mit geringen oder sehr geringen Flussmengen in der Mischerzuleitung, wenn also fast die gesamte von der Pumpe geförderte Flussmenge durch die Fluid-Rückleitung in den Tank zurück geleitet werden soll, kann (erkennbar an der Summenkontrolle) der dritte Zähler (in der nun wie gesagt kaum durchflossenen Mischerzuleitung) für das Einstellen der Verteilereinrichtung ignoriert werden, und die Einstellung der Verteilereinrichtung kann sich nur noch nach dem zweiten Zähler in der Fluid-Rückleitung richten.

Die Verteilereinrichtung kann ein Verteilerkugelhahn sein, der (sozusagen als dosierbare Volumenstrom-Weiche) durch Verdrehen einer Absperrkugel mit verdrehbarem Durchflussloch den Strömungsquerschnitt und/oder Strömungswiderstand und damit die Flussmenge in seinem einen Ausgang in demselben Maße verringert, wie er sie in seinem anderen Ausgang vergrößert. Das gleiche kann erfindungsgemäß auch über ein Stößelventil und/oder Schieberventil verwirklicht werden. Prinzipiell eignen sich beliebige technische Ausgestaltungen einstellbarer, insbesondere regelbarer Fluidleitungs-Verteilerweichen.

Alternativ zu dieser spezialisierten Armatur kann die Verteilereinrichtung also zum Beispiel auch eine einfache (wie üblich möglichst druckverlustfreie) Leitungsabzweigung aufweisen, die in zwei Dosierkugelhähne oder einstellbare Drosseln jeweils mit einstellbarer Ausgangs-Flussmenge führt. An einer Koppeleinrichtung ist dann das Flussmengenverhältnis einstellbar, indem die Koppeleinrichtung die Ausgangs-Flussmenge an einem der beiden Dosierkugelhähne bzw. einer der beiden Drosseln um denselben Betrag vermindert, um den sie die Ausgangs-Flussmenge an der anderen der beiden Dosierkugelhähne vergrößert. Dies kann mechanisch erfolgen, indem die Koppeleinrichtung durch ein mechanisches Getriebe, insbesondere mit einem Gestänge, die beiden Dosierkugelhähne zum Beispiel gegenläufig betätigt. Aber zum Beispiel auch eine elektromechanische Koppeleinrichtung etwa mit gegenläufig angesteuerten Stellmotoren der beiden Dosierkugelhähne bzw. der beiden Drosseln ist erfindungsgemäß möglich.

Diese und weitere Vorteile und Merkmale der Erfindung werden anhand der folgenden Abbildungen weiter beschrieben.

Darin zeigen
- Fig. 1: ein schematisches Flussdiagramm einer Vorrichtung zum genauen Dosieren eines Fluid-Volumenstroms geringer Flussmenge in einer Kunststoff-Mischerzuleitung (ohne den erfindungsgemäßen dritten Volumenstromzähler in der Kunststoff-Mischerzuleitung),
- Fig. 2: ein schematisches Flussdiagramm einer alternativen Ausgestaltung einer Vorrichtung zum genauen Dosieren eines Fluid-Volumenstroms geringer Flussmenge in einer Kunststoff- Mischerzuleitung (ohne den erfindungsgemäßen dritten Volumenstromzähler in der Kunststoff-Mischerzuleitung), und
- Fig. 3: ein schematisches Flussdiagramm einer anderen alternativen Ausgestaltung einer erfindungsgemäßen Vorrichtung zum genauen Dosieren eines Fluid-Volumenstroms geringer Flussmenge in einer Kunststoff-Mischerzuleitung

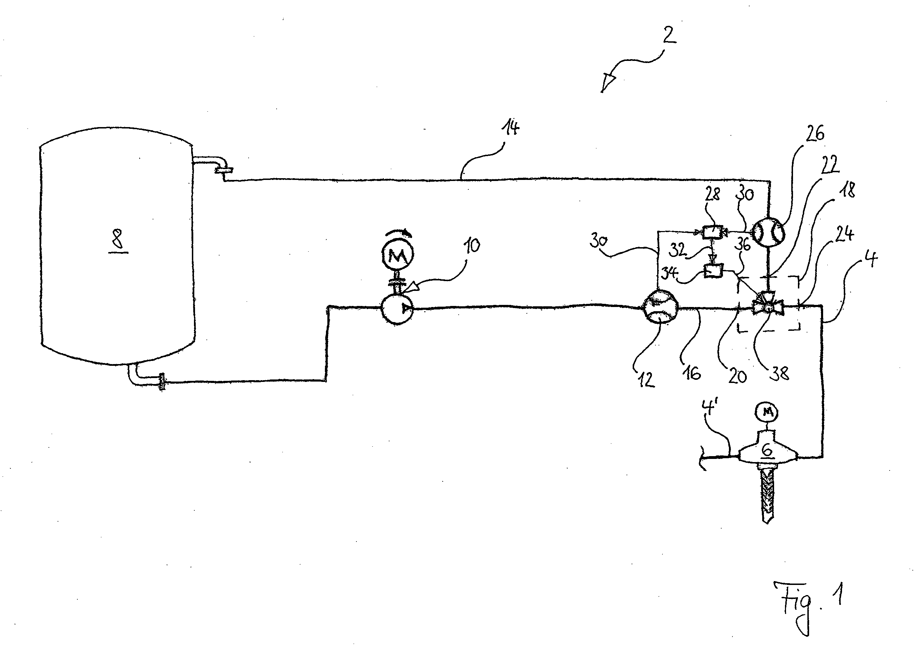

Gemäß Fig. 1, 2 und 3 dient eine Vorrichtung 2 zum genauen Dosieren eines Flüssigkeits-Volumenstroms von sehr großen Mengen (zum Beispiel von ungefähr 20 1/min) bis zum kompletten Stillstand der Flussmenge in einer Mischerzuleitung 4 (von mehreren 4, 4'), durch die je eine Kunststoff-Flüssigkomponente in sehr geringem Volumenstrom zu einem Kunststoffmischer 6 gefördert werden soll. Die Vorrichtung 2 hat einen Fluidvorratstank 8, der über eine Pumpe 10 und durch einen ersten Volumenstromzähler 12 in Fluidleitungsverbindung mit der Mischerzuleitung 4 steht. Diese - soweit - bekannte Anordnung ist aber wie eingangs dargestellt beim Unterschreiten einer gewissen Fördermenge ungenau betreffend die Flussmenge des geförderten Volumenstroms, was ein falsches Komponenten-Mischungsverhältnis im Mischer 6 zur nachteiligen Folge haben kann und zum Beispiel zu minderwertigen Materialeigenschaften und Materialinhomogenitäten des so gemischten Kunststoffs (nicht dargestellt) führt oder sogar zum Abbruch der Kunsstoffmischungsproduktion überhaupt, etwa weil die (geringe) Fördermenge innerhalb der Toleranz der Fördergenauigkeit der Pumpe 10 oder des Volumenstromzählers 12 und/oder ihrer Steuerung oder Regelung so dicht an Null liegt, dass eine - nur so weit ausgestaltete - Anlage tatsächlich gar nicht mehr fördern könnte.

Erfindungsgemäß aber gibt es deshalb in der Vorrichtung 2 eine Fluid-Rückleitung 14, die von der Fluidleitung 16 (zwischen Tank 8 und Mischerzuleitung 4) stromabwärts vom ("hinter dem") ersten Volumenstromzähler 12 abzweigt und in den Tank 8 zurückführt.

Die Abzweigung erfolgt in einer Verteilereinrichtung 18, die einen Eingang 20 (als Einmündung der vom Tank 8 kommenden Fluidleitung 16) und zwei Ausgänge 22, 24 (einen Ausgang 22 in die Rückleitung 14 und einen Ausgang 24 in die Mischerzuleitung 4) aufweist. Diese Verteilereinrichtung 18 verteilt den von der Pumpe 10 aus dem Tank 8 geförderten Volumenstrom (den Volumenstrom am Eingang 20 der Verteilereinrichtung 18) auf die zwei Ausgänge 22, 24 der Verteilereinrichtung 18, und zwar in einem möglichst genau einstellbaren Flussmengenverhältnis.

Die Fluid-Rückleitung 14 weist zudem einen zweiten (sehr genauen) Volumenstromzähler 26 auf. Wenn nun ein sehr geringer Volumenstrom in der Mischerzuleitung 4 erforderlich ist (oder zumindest ein so geringer Volumenstrom, dass die herkömmliche Anlage mit Tank, Pumpe und Messzelle / Volumenstromzähler / Massestromzähler oder sonstige Messeinrichtung nicht mehr genau fördern kann), kann die Pumpe 10 einen (weiterhin deutlich größeren) Volumenstrom aus dem Tank 8 durch den ersten Volumenstromzähler 12 in den Eingang 20 der Verteilereinrichtung 18 fördern, den sie nämlich gemäß ihren technischen Spezifikationen konstant und/oder genau zu fördern technisch in der Lage ist. Dieser (weiterhin deutlich größere) Volumenstrom ist am ersten Volumenstromzähler 12 messbar. Indem nun (zum Beispiel kurz vor Unterschreiten der Fördergenauigkeit der Anlage ohne die erfindungsgemäße Rückleitung) an der Verteilereinrichtung 18 in die (zurück zum Tank 8 führende) Rückleitung 14 ein Volumenstrom abgezweigt wird, der auch genau so groß sein kann wie der Volumenstrom durch den ersten Volumenstromzähler 12 (dieser "Rück-Volumenstrom" messbar am zweiten Volumenstromzähler 26 in der Rückleitung 14) und indem sich diese (durchaus erfindungsgemäß möglicherweise sehr kleine) Differenz zwischen durch den ersten Volumenstromzähler 12 gefördertem Volumenstrom und in die Rückleitung 14 abgezweigtem Volumenstrom an der Verteilereinrichtung 18 genau einstellen lässt, ergibt sich genau diese - möglicherweise sehr kleine - Volumenstrom-Differenz als resultierender - möglicherweise sehr kleiner - Volumenstrom erfindungsgemäß in der Mischerzuleitung 4.

Vorzugsweise hat die Vorrichtung 2 eine Signalverarbeitungseinrichtung 28, die aus Signalen 30 der beiden Volumenstromzähler 12, 26 ein Differenzsignal 32 berechnet, sowie in jedem Fall eine Steuerungseinrichtung 34, die in Abhängigkeit von diesem Differenzsignal 32 ein Stellsignal 36 an die Verteilereinrichtung 18 sendet, um das Flussmengenverhältnis einzustellen. Das zuvor beschriebene Verfahren kann dann also automatisch, gesteuert oder geregelt erfolgen.

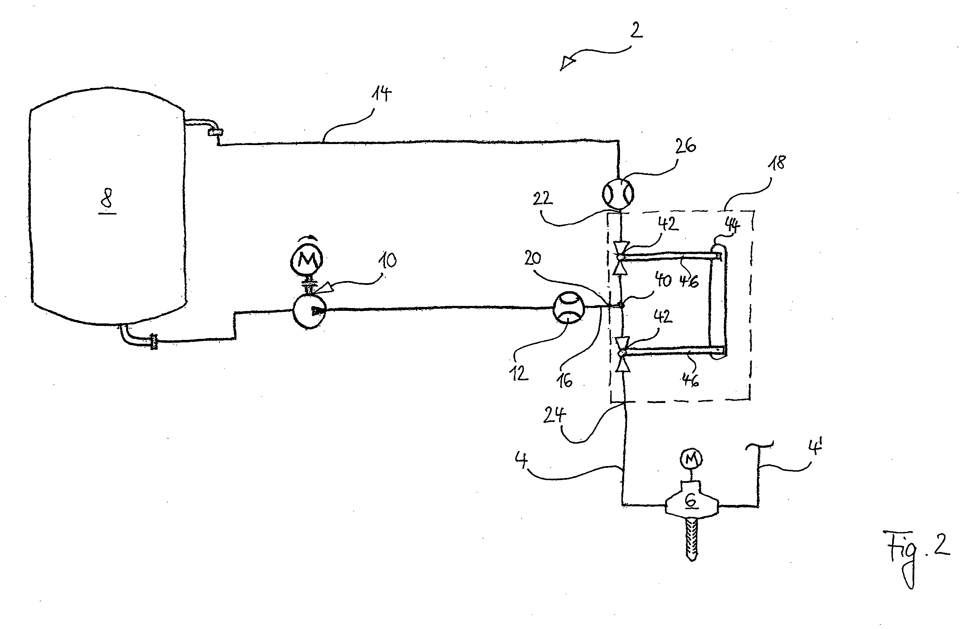

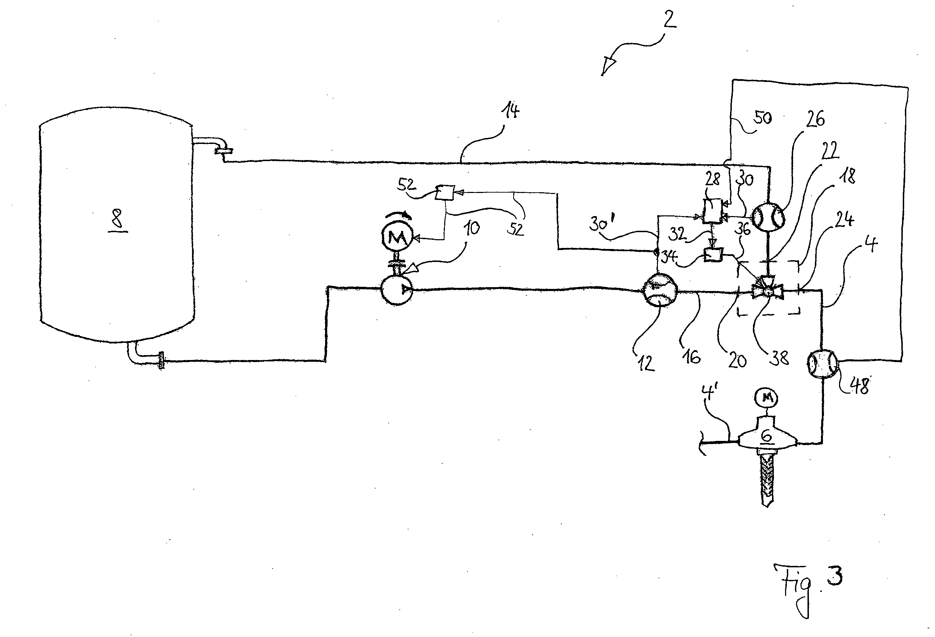

Die Verteilereinrichtung 18 kann gemäß Figur 1 und 3 ein Verteilerkugelhahn 38 (oder auch ein Schieber- oder Stößelventil) sein, der (sozusagen als dosierbare Volumenstrom-Weiche) durch Verdrehen einer Absperrkugel (nicht dargestellt) mit verdrehbarem Durchflussloch (nicht dargestellt) (oder auch durch Verschieben eines Schiebers oder Stößels; nicht dargestellt) den Strömungsquerschnitt und/oder Strömungswiderstand und damit die Flussmenge in seinem einen Ausgang 22, 24 in demselben Maße verringert, wie er sie in seinem anderen Ausgang 24, 22 vergrößert. Alternativ zu dieser spezialisierten Armatur 38 kann die Verteilereinrichtung 18 auch wie gemäß Figur 2 eine einfache (wie üblich möglichst druckverlustfreie) Leitungsabzweigung 40 aufweisen, die in zwei Dosierkugelhähne 42 jeweils mit einstellbarer Ausgangs-Flussmenge führt. An einer Koppeleinrichtung 44 ist dann das Flussmengenverhältnis einstellbar, indem die Koppeleinrichtung 44 die Ausgangs-Flussmenge an einem der beiden Dosierkugelhähne 42 mechanisch um denselben Betrag vermindert, um den sie die Ausgangs-Flussmenge an der anderen der beiden Dosierkugelhähne 42 vergrößert. Dies erfolgt mechanisch, indem die Koppeleinrichtung 44 durch ein mechanisches Getriebe mit einem Gestänge 46 die beiden Dosierkugelhähne 42 gegenläufig betätigt. Gemäss Figur 3 wird erfindungsgemäss vorgesehen, auch in der Fluidleitung 4 die von der Verteilereinrichtung 18 zum Mischer 6 führt, einen dritten Volumenstromzähler 48 anzuordnen. Dies ermöglicht, die Flussmenge in der Mischerzuleitung 4 von 100% der Förderleistung der Pumpe 10 über geringe Flussmengen wie 1%, 0,1% der Förderleistung bis zum Stillstand genau einzustellen und zu messen und dabei die Pumpe 10 nur auf eine einzige bestimmte Fördermenge eingestellt zu lassen (zum Beispiel die höchste für einen Mischprozess erforderliche - sie lässt sich mittels des ersten Zählers 12 kontrollieren, durch eine Datenleitung 52 und Steuereinrichtung 54 auch regeln oder steuern). Dann kann die jeweils momentan in der Mischerzuleitung 4 benötigte Flussmenge (und eben dank des dritten Zählers 48 auch schon bei hohen in der Mischerzuleitung benötigten Flussmengen) durch Einstellen, also Steuern oder Regeln mittels der Steuereinheit 34, nur der Verteilereinrichtung 18 dosiert werden - und zwar kontrolliert, also gesteuert oder geregelt, durch den zweiten und dritten Volumenstromzähler 26, 48. Dabei können die Messwerte 30 des zweiten Volumenstromzählers 26 und die Messwerte 50 des dritten Volumenstromzählers 48 zum Beispiel so lange beide (zum Beispiel in der Signalverarbeitungseinrichtung 28 gemittelt) der Einstellung 32, 34 der Verteilereinrichtung 18 zu Grunde gelegt werden, wie "die Summenkontrolle stimmt": nämlich die Summe der im zweiten Volumenstromzähler 26 gemessenen Flussmenge 30 und der im dritten Volumenstromzähler 48 gemessenen Flussmenge 50 gleich der im ersten Volumenstromzähler 12 gemessenen Flussmenge 30' ist (denn die Summe der aus der Verteilereinrichtung 18 ausfließenden Volumenströme muss gleich dem einfließenden Volumenstrom sein - entsprechend auch nach diesem Kriterium können insbesondere alle drei Volumenstromzähler 12, 26, 48 zum Beispiel vor Beginn des Prozesses auch gegenseitig kalibriert werden). Sobald die Summe der Messwerte des zweiten und dritten Volumenstromzählers 26, 48 dann aber von der im ersten Volumenstromzähler 12 gemessenen Flussmenge 30' abweicht, bedeutet dies (bei wie gesagt kalibrierten Volumenstromzählern), dass nun die Messung eines der beiden Zähler 26, 48 ungenau, nämlich die Flussmenge durch einen der beiden (des zweiten 26 oder dritten 48) zu gering geworden ist, um noch genau genug gemessen zu werden - die Flussmenge durch ihn liegt nun unter seiner zur genauen Messung minimalen Flussmenge, also außerhalb, nämlich unterhalb seines Toleranzbereichs. Dieser Volumenstromzähler wird nun für das Einstellen, also Steuern oder Regeln, der Verteilereinrichtung 18 solange ignoriert bis die Summenkontrolle wieder stimmt.

Zum Bespiel: Solange (zum Beispiel zu Beginn eines Mischprozesses) eine hohe Flussmenge in die Mischerzuleitung 4 gelangen soll, wird - eingestellt (also gesteuert oder geregelt mittels der Steuereinheit 34) an der Verteilereinrichtung 18 - nur ein geringer Anteil der von der Pumpe 10 geförderten Flussmenge durch die Fluid-Rückleitung 14 abgeleitet (in den Tank 8 zurückgeleitet). Wenn die gesamte von der Pumpe 10 geförderte Flussmenge in die Mischerzuleitung 4 gelangen soll, wird gar nichts durch die Fluid-Rückleitung 14 in den Tank 8 zurückgeleitet. In einem dieser Betriebszustände kann dann die Messung des zweiten Volumenstromzählers 26 (in der Fluid-Rückleitung 14) ignoriert werden, denn die Flussmenge liegt hier dann wohl (erkennbar an der Summenkontrolle - und programmiert in einer entsprechenden Regelung oder Steuerung 28, 34) wie beschrieben unterhalb der Toleranz des zweiten Volumenstromzählers 26. Sobald die Summenkontrolle wieder stimmt - sobald also sowohl durch die Fluid-Rückleitung 14 als auch durch die Mischerzuleitung 4 ein Volumenstrom fließt, der groß genug ist, um im Toleranzbereich des zweiten und des dritten Zählers 26, 48 zu liegen - braucht keiner der beiden Zähler ignoriert zu werden. Dies ist logischerweise der Betriebszustand bei mittleren Flussmengen in der Mischerzuleitung 4, wenn also nicht mehr die gesamte oder fast die gesamte von der Pumpe 10 geförderte Flussmenge in die Mischerleitung 4 gelangen soll, sondern wenn ein (vom dritten Zähler 48 genau messbarer) Volumenstrom durch die Mischerzuleitung 4 fließt und außerdem auch ein (vom zweiten Zähler 26 genau messbarer) Volumenstrom durch die Fluid-Rückleitung 14. Wenn dann schließlich ein Betriebszustand erforderlich ist mit geringen oder sehr geringen Flussmengen in der Mischerzuleitung 4, wenn also fast die gesamte von der Pumpe 10 geförderte Flussmenge durch die Fluid-Rückleitung 14 in den Tank 8 zurück geleitet werden soll, kann (erkennbar an der Summenkontrolle) der dritte Zähler 48 (in der nun wie gesagt kaum - aber eben mit genau diesem sehr geringen einzustellenden Volumenstrom - durchflossenen Mischerzuleitung 4) für das Einstellen der Verteilereinrichtung 18 ignoriert werden, und die Einstellung der Verteilereinrichtung 18 kann sich nur noch nach dem zweiten Zähler 26 in der Fluid-Rückleitung 14 richten.

## Patentansprüche

1. Vorrichtung
- zum genauen Dosieren eines Fluid-Volumenstroms auch geringer Flussmenge bis zum Stillstand des Volumenstroms einer Flüssigkomponente in einer Mischerzuleitung (4) zum Mischen von Kunststoffen
- mit einem Fluidvorratstank (8), der über eine Pumpe (10) und durch einen ersten Volumenstromzähler (12) in Fluidleitungsverbindung mit der Mischerzuleitung (4) steht,
mit einer Fluid-Rückleitung, die durch einen zweiten Volumenstromzähler (26) in den Tank (8) zurück führt und die von einer Fluidleitung (16) zwischen Tank und Mischerzuleitung stromabwärts vom ersten Volumenstromzähler durch eine Verteilereinrichtung (18) abzweigt, die einen Eingang (20) und zwei Ausgänge (22, 24) aufweist und die einen Eingangs-Volumenstrom auf die zwei Ausgänge (22, 24) verteilt, und zwar in einstellbarem Flussmengenverhältnis, **dadurch gekennzeichnet, dass** stromabwärts vom Ausgang aus der Verteilereinrichtung (18) in die Mischerzuleitung (4) in einer Leitungsverbindung ein dritter Volumenstromzähler (48) angeordnet ist,
mit einer Steuerungseinrichtung, die das Flussmengenverhältnis in Abhängigkeit von Signalen des ersten und zweiten Volumenstromzählers (12, 26) an der Verteilereinrichtung (18) steuert oder regelt.

2. Vorrichtung nach dem vorhergehenden Anspruch, **gekennzeichnet durch** eine Signalverarbeitungseinrichtung, die aus Signalen des ersten und zweiten Volumenstromzählers (12, 26) ein Differenzsignal (32) berechnet.

3. Vorrichtung nach einem der vorhergehenden Ansprüche, **gekennzeichnet durch** eine Steuerungseinrichtung, die in Abhängigkeit von Signalen eines oder der beiden Volumenstromzähler (12), nämlich in Abhängigkeit von einem Differenzsignal (32) daraus, an der Verteilereinrichtung (18) das Flussmengenverhältnis steuert oder regelt.

4. Vorrichtung nach einem der vorhergehenden Ansprüche, **dadurch gekennzeichnet, dass** die Verteilereinrichtung (18) einen Verteilerkugelhahn und/oder ein Schieberventil und/oder ein Stößelventil aufweist.

5. Vorrichtung nach einem der vorhergehenden Ansprüche, **dadurch gekennzeichnet, dass** die Verteilereinrichtung (18) eine Leitungsabzweigung (40) aufweist, die in zwei Dosierkugelhähne (42) jeweils mit einstellbarer Ausgangs-Flussmenge führt, sowie eine Koppeleinrichtung (44), an der das Flussmengenverhältnis einstellbar ist, indem sie die Ausgangs-Flussmenge an einem der beiden Dosierkugelhähne (42) um denselben Betrag vermindert, um den sie die Ausgangs-Flussmenge an der anderen der beiden Dosierkugelhähne (42) vergrößert.

6. Vorrichtung nach dem vorhergehenden Anspruch, **dadurch gekennzeichnet, dass** die Koppeleinrichtung (44) durch ein mechanisches Getriebe, insbesondere mit einem Gestänge, die beiden Dosierkugelhähne (42) betätigt.

## Claims

1. Apparatus
- for precise metering of a fluid volume flow of a liquid component even with a low flow quantity until the volume flow stops in a mixer inlet pipe (4) for mixing plastics
- having a fluid storage tank (8) which is in fluid communication with the mixer inlet pipe (4) via a pump (10) and through a first volumetric flow meter (12),
having a fluid return pipe which leads back into the tank (8) through a second volumetric flow meter (26) and which branches off from a fluid pipe (16) between tank and mixer inlet pipe downstream of the first volumetric flow meter through a distributor device (18) which has one input (20) and two outputs (22, 24) and which distributes an input volume flow to the two outputs (22, 24), this being in an adjustable flow quantity ratio,
**characterised in that** downstream of the output from the distributor device (18) into the mixer inlet pipe (4) in a pipe connection is disposed a third volumetric flow meter (48),
having a control device which controls or regulates the flow quantity ratio as a function of signals from the first and second volumetric flow meters (12, 26) on the distributor device (18).

2. Apparatus according to the preceding claim, **characterised by** a signal processing device which calculates a differential signal (32) from signals from the first and second volumetric flow meters (12, 26).

3. Apparatus according to any of the preceding claims, **characterised by** a control device which controls or regulates the flow quantity ratio as a function of signals from one or both volumetric flow meters (12), namely as a function of a differential signal (32), on the distributor device (18).

4. Apparatus according to any of the preceding claims, **characterised in that** the distributor device (18) has a distributor ball valve and/or a slide valve and/or a stem-actuated valve.

5. Apparatus according to any of the preceding claims, **characterised in that** the distributor device (18) has a pipe branch (40) which leads into two metering ball valves (42), each with adjustable output flow quantity, as well as a coupling device (44) at which the flow quantity ratio is adjustable by reducing the output flow quantity at one of the two metering ball valves (42) by the same amount by which it increases the output flow quantity at the other of the two metering ball valves (42).

6. Apparatus according to the preceding claim, **characterised in that** the coupling device (44) actuates the two metering ball valves (42) by a mechanical gear mechanism, in particular with a system of rods.

## Revendications

1. Dispositif
- destiné à doser exactement un courant volumique de fluide même de petit débit jusqu'à l'arrêt du courant volumique d'un composant liquide dans une conduite d'alimentation de mélangeur (4) afin de mélanger des matières plastiques,
- avec un réservoir de fluide (8), qui est en communication fluidique avec la conduite d'alimentation de mélangeur (4) par l'intermédiaire d'une pompe (10) et via un premier compteur de courant volumique (12),
avec une conduite de retour de fluide, qui retourne dans le réservoir (8) via un deuxième compteur de courant volumique (26) et qui, à partir d'une conduite de fluide (16) entre réservoir et conduite d'alimentation de mélangeur, en aval du premier compteur de courant volumique, se ramifie au moyen d'un dispositif répartiteur (18) qui comporte une entrée (20) et deux sorties (22, 24) et répartit le courant volumique d'entrée sur les deux sorties (22, 24),
et ce dans un rapport de débit réglable,
**caractérisé en ce que,** en aval de la sortie du dispositif répartiteur (18), un troisième compteur de courant volumique (48) est agencé dans un raccord de conduite dans la conduite d'alimentation de mélangeur (4),
avec un dispositif de commande qui commande ou régule dans le dispositif répartiteur (18) le rapport de débit en fonction de signaux du premier et du deuxième compteur de courant volumique (12, 26).

2. Dispositif selon la revendication précédente, **caractérisé par** un dispositif de traitement de signal qui calcule un signal de différence (32) à partir de signaux du premier et du deuxième compteur de courant volumique (12, 26).

3. Dispositif selon l'une quelconque des revendications précédentes, **caractérisé par** un dispositif de commande qui commande ou régule dans le dispositif répartiteur (18) le rapport de débit en fonction de signaux d'un ou des deux compteurs de courant volumique (12), à savoir en fonction d'un signal de différence (32) de ceux-ci.

4. Dispositif selon l'une quelconque des revendications précédentes, **caractérisé en ce que** le dispositif répartiteur (18) comporte un robinet à boisseau sphérique de distribution et/ou une soupape à coulisse et/ou une soupape à poussoir.

5. Dispositif selon l'une quelconque des revendications précédentes, **caractérisé en ce que** le dispositif répartiteur (18) comporte une ramification de conduite (40) qui mène dans deux robinets à boisseau sphérique de dosage (42), à chaque fois avec un débit de sortie réglable, ainsi qu'un dispositif de couplage (44) dans lequel le rapport de débit est réglable du fait qu'il diminue le débit de sortie dans l'un des deux robinets à boisseau sphérique de dosage (42) dans la même proportion qu'il augmente le débit de sortie dans l'autre des deux robinets à boisseau sphérique de dosage (42).

6. Dispositif selon la revendication précédente, **caractérisé en ce que** le dispositif de couplage (44) actionne les deux robinets à boisseau sphérique de dosage (42) via une transmission mécanique, en particulier avec des tringles.
